# EUROPÄISCHE PATENTSCHRIFT

(11) **EP 2 592 413 B1**
(45) Veröffentlichungstag und Bekanntmachung des Hinweises auf die Patenterteilung: **06.01.2021**
(21) Anmeldenummer: 12191584.7
(22) Anmeldetag: 07.11.2012
(51) Int. Cl.: G01N 21/64, G02B 21/00

(54) **Verfahren zum Messen der Fluoreszenzlebensdauer eines angeregten Zustandes in einer Probe**
Method for measuring the fluorescence lifetime of an excited state in a sample
Procédé de mesure de la durée de vie de la fluorescence d'un état excité dans un échantillon

(30) Priorität: 14.11.2011 DE 102011055330
(43) Veröffentlichungstag der Anmeldung: 15.05.2013
(60) Teilanmeldung: 20193216.7
(73) Patentinhaber: Leica Microsystems CMS GmbH, 35578 Wetzlar (DE)
(72) Erfinder: Widzgowski, Bernd, 69221 Dossenheim (DE)
(74) Vertreter: Hoffmann, Jürgen

(56) Entgegenhaltungen:
- EP-A1- 1 291 627
- WO-A2-2010/045400
- US-A- 5 909 278
- US-A1- 2002 063 863
- US-A1- 2007 259 451
- MARTIN VANDEVEN ET AL: "Pitfalls and Their Remedies in Time-Resolved Fluorescence Spectroscopy and Microscopy", JOURNAL OF FLUORESCENCE, KLUWER ACADEMIC PUBLISHERS-PLENUM PUBLISHERS, NE, Bd. 15, Nr. 3, 1. Mai 2005 (2005-05-01), Seiten 377-413, XP019281696, ISSN: 1573-4994
- ANN D ARUL ET AL: "Experimental Procedures for Fluorescent Lifetime Measurements with Customized Embedded DSP Systems and Adaptive Algorithms", REGION 5 TECHNICAL CONFERENCE, 2007 IEEE, IEEE, PI, 1. April 2007 (2007-04-01), Seiten 124-128, XP031158993, ISBN: 978-1-4244-1279-2
- Anonymous: "Which Fluorescence Lifetime System is Best for You?", SPEX Fluorescence Group Application Notes F-10, 1 January 2004 (2004-01-01), XP055413255, Retrieved from the Internet: URL:http://www.horiba.com/fileadmin/upload s/Scientific/Documents/Fluorescence/F-10.p df [retrieved on 2017-10-06]
- Michael Wahl: "The Principle of Time-Correlated Single Photon Counting", PicoQuant Technical Note, 24 June 2014 (2014-06-24), pages 1-14, XP055135297, Retrieved from the Internet: URL:http://www.picoquant.com/images/upload s/page/files/7253/technote_tcspc.pdf [retrieved on 2014-08-19]
- Anonymous: "Digitalsignal", Wikipedia, 24 October 2011 (2011-10-24), XP055546336, Retrieved from the Internet: URL:https://de.wikipedia.org/w/index.php?t itle=Digitalsignal&oldid=95167666 [retrieved on 2019-01-23]
- Anonymous: "Fluoreszenzlebensdauer - Wikipedia", , 16 November 2010 (2010-11-16), XP055594172, Retrieved from the Internet: URL:https://de.wikipedia.org/w/index.php?t itle=Fluoreszenzlebensdauer&oldid=81572318 [retrieved on 2019-06-05]
- Anonymous: "User Handbook Leica MP-FLIM and D-FLIM", , 1 May 2006 (2006-05-01), XP055601411, Retrieved from the Internet: URL:http://www.genetik.biologie.uni-muench en.de/service/clsm_booking/download_materi als/flim_bh-manual_10-08.pdf [retrieved on 2019-07-02]

## Beschreibung

Die Erfindung betrifft ein Verfahren zum Messen der Lebensdauer eines angeregten Zustandes in einer Probe, insbesondere einer Fluoreszenzlebensdauer, sowie eine Vorrichtung zum Ausführen eines solchen Verfahrens.

Die Erfindung betrifft außerdem eine Vorrichtung zum Messen der Lebensdauer eines angeregten Zustandes in einer Probe, insbesondere einer Fluoreszenzlebensdauer mit einer Lichtquelle zum Erzeugen eines Anregungslichtpulses zum Beleuchten eines Probenbereichs mit dem Anregungslichtpuls und mit einem Detektor zum Detektieren des von dem Probenbereich ausgehenden Detektionslichtes.

Durch Untersuchen der Lebensdauer der angeregten Zustände einer mit einem oder mehreren Fluoreszenzfarbstoffen markierten Probe können wichtige Erkenntnisse über die Eigenschaften der Probe gewonnen werden. Insbesondere bei der Verwendung mehrerer Fluoreszenzfarbstoffe können mithilfe der Fluorecence Liftime Imaging Microscopy (FLIM) beispielsweise Erkenntnisse über einen untersuchten Probenbereich, wie die Zusammensetzung oder dessen Umgebung, gewonnen werden. So kann beispielsweise in der Zellbiologie durch Messung der Lebensdauer der Fluoreszenzfarbstoffe indirekt auf die Kalziumkonzentration in einem Probenbereich geschlossen werden.

Es gibt eine Reihe von Methoden zur Messung der Lebensdauer der angeregten Zustände von Fluoreszenzfarbstoffen. Einige dieser Methoden sind in den Kapiteln 4 und 5 des Lehrbuchs von Joseph R. Lakowicz, "Principles of Fluorescence Spectroscopy", Kluwer Academic/Plenum Publishers, second edition, 1999, ausführlich beschrieben. Beispielsweise ist es möglich, die Leistung des Anregungslichtes zeitlich zu modulieren, um aus der Phasenverzögerung des Emissionslichtes auf die Lebensdauer des angeregten Zustandes zu schließen.

Es ist auch möglich, die Fluoreszenzfarbstoffe mit kurzen Lichtpulsen anzuregen, um elektronisch den zeitlichen Versatz der Emissionslichtpulse zu messen. Beispielsweise ist aus DE 10 2004 017 956 A1 ein Mikroskop zur Untersuchung der Lebensdauer angeregter Zustände in einer Probe mit mindestens einer Lichtquelle, die Anregungslicht erzeugt, und mit mindestens einem Detektor, der von der Probe ausgehendes Detektionslicht empfängt, bekannt. Das Mikroskop ist dadurch gekennzeichnet, dass die Lichtquelle einen Halbleiterlaser beinhaltet, der gepulstes Anregungslicht emittiert, wobei eine Einstellvorrichtung zur Einstellung der Pulsrepetitionsrate auf die spezifischen Lebensdauereigenschaften der Probe vorgesehen ist.

Insbesondere die zur Datenauswertung erforderliche Elektronik wird - oft in Form von PC-Einsteckkarten - kommerziell angeboten. Eine solche Zeitmesskarte hat jedoch - abgesehen von dem hohen Preis - den Nachteil einer sehr langen Totzeit, so dass sie nach dem Anregen der Probe nur das Eintreffen des ersten Detektionslichtpulses (erstes Detektionsphoton) erfassen kann und danach für einen erheblichen Zeitraum "blind" ist. Letztlich bleibt ein wesentlicher Teil der Informationen, die das von der Probe ausgehende Detektionslicht beinhaltet, dem Anwender verborgen.

Darüber hinaus ist eine hohe Repetitionsrate von Anregungspulsen und damit ein häufiges Messen innerhalb eines Messzeitraumes nicht möglich. Tatsächlich liegt die erzielbare Messrate weit unter den üblichen Repetitionsraten von kommerziell erwerbbaren Pulslasern. Aus diesem Grund dauert es üblicherweise sehr lange, bis ausreichend viele Daten aufgenommen worden sind, um beispielsweise eine FLIM-Abbildung zu erzeugen.

Es ist daher die Aufgabe der vorliegenden Erfindung, ein Verfahren anzugeben, das es erlaubt, genauere Messergebnisse in kürzerer Zeit zu erzielen.

Diese Aufgabe wird durch ein Verfahren gemäß Anspruch 1 gelöst. Vorteilhafte Ausführungsformen sind in den abhängigen Ansprüchen beschrieben.

Das Verfahren weist folgende Schritte auf:
a. Erzeugen eines Anregungslichtpulses und Beleuchten eines Probenbereichs mit dem Anregungslichtpuls,
b. Erzeugen einer ersten digitalen Datenfolge, die den zeitlichen Lichtleistungsverlauf des Anregungslichtpulses repräsentiert,
c. Ermitteln eines ersten Schaltzeitpunktes aus der ersten digitalen Datenfolge, wobei
   i. als erster Schaltzeitpunkt derjenige Zeitpunkt festgelegt wird, bei dem innerhalb der ersten Datenfolge und/oder innerhalb eines ersten Datenwortes ein Wechsel von einem unteren standardisierten Signal zu einem oberen standardisierten Signal oder ein Wechsel von einem oberen standardisierten Signal zu einem unteren standardisierten Signal vorliegt, oder wobei
   ii. als erster Schaltzeitpunkt derjenige Zeitpunkt festgelegt wird, bei dem aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
d. Detektieren des von dem Probenbereich ausgehenden Detektionslichtes mit einem Detektor als mindestens ein Photonenereignis,
e. Erzeugen einer zweiten digitalen Datenfolge, die den zeitlichen Lichtleistungsverlauf des Detektionslichtes repräsentiert,
f. Ermitteln eines zweiten Schaltzeitpunktes aus der zweiten digitalen Datenfolge, wobei
   i. als zweiter Schaltzeitpunkt derjenige Zeitpunkt festgelegt wird, bei dem innerhalb der zweiten Datenfolge ein Wechsel von einem unteren standardisierten Signal zu einem oberen standardisierten Signal oder ein Wechsel von einem oberen standardisierten Signal zu einem unteren standardisierten Signal vorliegt, oder wobei
   ii. als zweiter Schaltzeitpunkt derjenige Zeitpunkt festgelegt wird, bei dem aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
g. Berechnen der zeitlichen Differenz zwischen dem ersten und dem zweiten Schaltzeitpunkt und wobei
h. die Schritte a bis g zyklisch wiederholt werden.

Es ist die weitere Aufgabe der vorliegenden Erfindung, eine Vorrichtung anzugeben, die es erlaubt, genauere Messergebnisse in kürzerer Zeit zu erzielen.

Die weitere Aufgabe wird durch eine Vorrichtung gemäß Anspruch 10 gelöst. Die Vorrichtung weist eine Steuerungsvorrichtung auf,
a. die eine erste digitale Datenfolge, die den zeitlichen Lichtleistungsverlauf des Anregungslichtpulses repräsentiert, erzeugt,
b. die aus der ersten digitalen Datenfolge einen ersten Schaltzeitpunkt ermittelt, wobei
   i. als erster Schaltzeitpunkt derjenige Zeitpunkt festgelegt wird, bei dem innerhalb der ersten Datenfolge und/oder innerhalb eines ersten Datenwortes ein Wechsel von einem unteren standardisierten Signal zu einem oberen standardisierten Signal oder ein Wechsel von einem oberen standardisierten Signal zu einem unteren standardisierten Signal vorliegt, oder wobei
   ii. als erster Schaltzeitpunkt derjenige Zeitpunkt festgelegt wird, bei dem aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
c. die eine zweite digitale Datenfolge erzeugt, die den zeitlichen Lichtleistungsverlauf des Detektionslichtes repräsentiert,
d. die aus der zweiten digitalen Datenfolge einen zweiten Schaltzeitpunkt ermittelt, wobei
   i. als zweiter Schaltzeitpunkt derjenige Zeitpunkt festgelegt wird, bei dem innerhalb der zweiten Datenfolge ein Wechsel von einem unteren standardisierten Signal zu einem oberen standardisierten Signal oder ein Wechsel von einem oberen standardisierten Signal zu einem unteren standardisierten Signal vorliegt, oder wobei
   ii. als zweiter Schaltzeitpunkt derjenige Zeitpunkt festgelegt wird, bei dem aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
e. die die zeitliche Differenz zwischen dem ersten und dem zweiten Schaltzeitpunkt berechnet, und wobei
f. die Schritte a bis e zyklisch wiederholt werden.

Erfindungsgemäß wurde unter anderem erkannt, dass über den Zeitpunkt des Eintreffens eines ersten Photons hinausgehende Informationen nur dann erhältlich sind, wenn die die Signale verarbeitende Steuerungsvorrichtung in der Lage ist, auch die Photonenereignisse zu erfassen, die zeitlich nach dem Eintreffen des ersten Photons auftreten, jedoch demselben Anregungslichtpuls zuzuordnen sind. Weiter wurde erkannt, dass dies dadurch erreicht werden kann, dass die analogen Messsignale sofort in digitale Zahlenfolgen übersetzt werden.

Die Erfindung ermöglicht in vorteilhafter Weise insbesondere zyklisch sich wiederholende Messungen mit einer Repetitionsfrequenz von 80 MHz und mehr, wie sie handelsübliche Pulslaser aufweisen. Darüber hinaus können genauere Informationen über das Lebensdauerverhalten der Probe gewonnen werden, weil - insbesondere aufgrund der Schnelligkeit der Informationsverarbeitung - nicht lediglich jeweils nur der Zeitpunkt des Eintreffens des jeweils ersten Photons ermittelt wird, sondern - geeignete Anregungslichtleistung vorausgesetzt - nahezu jedes Photonenereignis.

Bei einer besonderen Ausführung des Verfahrens ist vorgesehen, dass der Anregungslichtpuls einem Primärlichtpuls entstammt, von dem ein Teil einem Anregungsdetektor zugeführt wird, der ein erstes analoges elektrisches Signal erzeugt, dessen zeitlicher Amplitudenverlauf vom zeitlichen Verlauf der Lichtleistung des Teils des Primärlichtpulses abhängt und dass das erste analoge elektrische Signal zum Erzeugen der ersten digitalen Datenfolge zeitlich - insbesondere in vorgegebenen und/oder vorgebbaren ersten Zeitrasterabschnitten - abgetastet wird.

Insbesondere kann vorgesehen sein, dass die Lichtquelle einen Primärlichtstrahl erzeugt, der mit einem Strahlteiler in einen Anregungslichtstrahl, der die Anregungslichtpulse beinhaltet, und einen Messstrahl aufgespalten wird, wobei ein Anregungsdetektor den Messstrahl empfängt und ein erstes analoges elektrisches Signal erzeugt, dessen zeitlicher Amplitudenverlauf vom zeitlichen Verlauf der Lichtleistung des Messstrahles abhängt und wobei die Steuerungsvorrichtung das erste analoge elektrische Signal zum Erzeugen der ersten digitalen Datenfolge zeitlich - insbesondere in vorgegebenen und/oder vorgebbaren ersten Zeitrasterabschnitten - abgetastet.

Ein besonders schnelles Erzeugen der ersten Datenfolge kann beispielsweise dadurch erreicht werden, dass die erste Datenfolge aus standardisierten elektrischen Signalen, insbesondere Binärziffern, derart erzeugt wird, dass entweder ein unteres standardisiertes Signal (beispielsweise "0") erzeugt wird, wenn die gerade abgetastete Amplitude unterhalb einer festgelegten und/oder festlegbaren ersten Anregungsschwelle liegt, oder ein oberes, vom unteren standardisierten Signal verschiedenes standardisiertes Signal (beispielsweise "1") erzeugt wird, wenn die gerade abgetastete Amplitude oberhalb eine festgelegten und/oder festlegbaren zweiten Anregungsschwelle liegt.

In vorteilhafter Weise kann vorgesehen sein, dass der Detektor ein zweites analoges elektrisches Signal erzeugt, dessen zeitlicher Amplitudenverlauf vom zeitlichen Verlauf der Lichtleistung des Detektionslichtes abhängt und dass das zweite analoge elektrische Signal zum Erzeugen der zweiten digitalen Datenfolge zeitlich - insbesondere in vorgegebenen und/oder vorgebbaren zweiten Zeitrasterabschnitten - abgetastet wird.

Analog wie in Bezug auf die erste Datenfolge kann vorgesehen sein, dass die zweite Datenfolge von standardisierten elektrischen Signalen, insbesondere Binärziffern, derart erzeugt wird, dass entweder ein unteres standardisiertes Signal erzeugt wird, wenn die gerade abgetastete Amplitude unterhalb einer festgelegten und/oder festlegbaren ersten Detektionsschwelle liegt, oder ein oberes, vom unteren standardisierten Signal verschiedenes standardisiertes Signal erzeugt wird, wenn die gerade abgetastete Amplitude oberhalb eine festgelegten und/oder festlegbaren zweiten Detektionsschwelle liegt.

Um möglichst alle Photonereignisse erfassen zu können ist bei einer vorteilhaften Ausführung vorgesehen, dass das erste und/oder das zweite analoge elektrische Signal zur Erzeugung von Datenfolgen - insbesondere von einer Steuerungsvorrichtung - mit einer Abtastfrequenz abgetastet wird, die wesentlich größer ist als die Repetitionsfrequenz. Insbesondere kann vorgesehen sein, dass das erste und/oder das zweite analoge elektrische Signal mit einer Abtastfrequenz abgetastet wird, die mehr als 50 mal, insbesondere mehr als 100 mal, größer ist als die Repetitionsfrequenz. Bei einer besonders vorteilhaften Ausführung wird das erste und/oder das zweite analoge elektrische Signal mit einer Abtastfrequenz abgetastet, die ca. 125 mal größer ist, als die Repetitionsfrequenz. Bei einer besonderen Ausführung wird das erste und/oder das zweite analoge elektrische Signal mit einer Abtastfrequenz von 10 GHz abgetastet, während die Repetitionsfrequenz 80 MHz beträgt.

Um die zeitliche Auflösung zusätzlich zu erhöhen ist bei einer besonderen Ausführung vorgesehen, dass das erste und/oder das zweite analoge elektrische Signal mehrmals abgetastet wird. Insbesondere kann vorgesehen sein, dass das erste und/oder das zweite analoge elektrische Signal mehrmals, jedoch mit einem - insbesondere stufenlos einstellbaren - Zeitversatz abgetastet wird, der kürzer ist, als ein Zeitrasterabschnitt.

Bei einer besonders vorteilhaften Ausführung, die besonders präzise Ergebnisse ermöglicht, wird das erste und/oder das zweite analoge elektrische Signal n mal jedoch mit einem Zeitversatz abgetastet, der dem n-ten Bruchteil eines Zeitrasterabschnitts entspricht. Beispielsweise bei einer doppelten Abtastung wäre demgemäß ein Zeitversatz von der Hälfte der Dauer eines Zeitrasterabschnitts vorzusehen.

Vorzugsweise werden anschließend die Abtastergebnisse der mehrmaligen Abtastungen miteinander zu der ersten Datenfolge bzw. zu der zweiten Datenfolge verrechnet, insbesondere ineinander verkämmt. Insbesondere kann durch mehrmaliges Abtasten und Verrechnen eine Datenfolge für jeweils denselben Messezeitraum erzeugt werden, die - im Vergleich zur einmaligen Abtastung - n-mal mehr Daten beinhaltet und damit einen wesentlich größeren Informationsgehalt aufweist.

Ein besonders schnelles und zuverlässiges Erzeugen der ersten digitalen Datenfolge ist ermöglicht, wenn es beispielsweise mit einer ersten Abtastvorrichtung erfolgt, die einen Komparator und/oder einen Proportionaldiskriminator aufweist. Insbesondere sind dadurch Abtastraten im Bereich von mehreren 10 GBit, beispielsweise von 28 GBit, ohne weiteres möglich. Gleiches gilt in Bezug auf das Erzeugen der zweiten digitalen Datenfolge, das vorteilhaft mit einer zweiten Abtastvorrichtung erfolgt, die ebenfalls einen Komparator und/oder einen Proportionaldiskriminator aufweist. Die Abtastraten können - müssen jedoch nicht notwendigerweise - gleich sein. Vielmehr kann in Abhängigkeit vom jeweiligen Anwendungsfall die Abtastrate zum Erzeugen der ersten digitalen Datenfolge von der Abtastrate zum Erzeugen der zweiten digitalen Datenfolge abweichen.

Bei einer vorteilhaften Ausführung des Verfahrens ist vorgesehen, dass die erste Datenfolge in parallele erste Datenworte umgesetzt wird und/oder dass die zweite Datenfolge in parallele zweite Datenworte umgesetzt wird. Insbesondere kann ein erster Seriell-Parallel-Wandler zum Umsetzen der ersten Datenfolge in parallele erste Datenworte vorgesehen sein. Alternativ oder zusätzlich kann auch vorgesehen sein, dass ein zweiter Seriell-Parallel-Wandler die zweite Datenfolge in parallele zweite Datenworte umsetzt. Eine solche Ausführung hat den besonderen Vorteil, dass die Datenworte in einer parallel arbeitenden Auswerteelektronik schnell und effizient weiterverarbeitet werden können.

Insbesondere kann vorteilhaft vorgesehen sein, dass der erste und/oder der zweite Seriell-Parallel-Wandler Datenworte erzeugt, die jeweils einen Messzeitraum repräsentieren, der mindestens so lang ist, wie der zeitliche Abstand aufeinanderfolgender Anregungslichtpulse.

Besonders vorteilhaft ist es, wenn der erste und/oder der zweite Seriell-Parallel-Wandler Datenworte erzeugt, die einen Messezeitraum repräsentieren, der genau so lang ist, wie der zeitliche Abstand aufeinanderfolgender Anregungslichtpulse; denn dann sind sämtliche Informationen, die zu einem auf einen Anregungslichtpuls zurückzuführenden Messzyklus gehören, jeweils in einem Datenwort zusammengefasst. Dies erleichtert die Handhabung der Daten und erhöht die Schnelligkeit und Effizienz der Auswertung.

Es kann vorgesehen sein, dass - insbesondere von einer Steuerungsvorrichtung - als erster Schaltzeitpunkt derjenige Zeitpunkt festgelegt wird, bei dem innerhalb der ersten Datenfolge und/oder innerhalb eines ersten Datenwortes ein Wechsel von einem unteren standardisierten Signal zu einem oberen standardisierten Signal oder ein Wechsel von einem oberen standardisierten Signal zu einem unteren standardisierten Signal vorliegt. Diese Art der Ermittlung des Schaltzeitpunktes ist besonders schnell.

Alternativ kann vorgesehen sein, dass - insbesondere von einer Steuerungsvorrichtung - als erster Schaltzeitpunkt derjenige Zeitpunkt festgelegt wird, der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge und/oder innerhalb des ersten Datenwortes, insbesondere durch Bildung des arithmetischen Mittels der Zeitabstände der Wechsel, errechnet wird. Diese Art der Ermittlung des Schaltzeitpunktes ist besonders genau.

Analog kann in gleicher Weise die Festlegung des zweiten Schaltzeitpunktes erfolgen. Nämlich dadurch, dass als zweiter Schaltzeitpunkt derjenige Zeitpunkt festgelegt wird, bei dem innerhalb der zweiten Datenfolge und/oder innerhalb eines zweiten Datenwortes ein Wechsel von einem unteren standardisierten Signal zu einem oberen standardisierten Signal oder ein Wechsel von einem oberen standardisierten Signal zu einem unteren standardisierten Signal vorliegt.

Alternativ kann auch in Bezug auf die Festlegung des zweiten Schaltzeitpunktes vorgesehen sein, dass diese - insbesondere von einer Steuerungsvorrichtung - aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der zweiten Datenfolge und/oder innerhalb eines zweiten Datenwortes, insbesondere durch Bildung des arithmetischen Mittels der Zeitabstände der Wechsel, errechnet wird.

Eine besonders genaue Information über die Eigenschaften des zu untersuchenden Probenbereichs kann dadurch erzielt werden, dass wenigstens eine Häufigkeitsverteilung mehrerer errechneter zeitlicher Differenzen generiert wird. Die Häufigkeitsverteilung kann beispielsweise beim anfertigen einer FLIM-Abbildung der Probe verwendet werden.

Insbesondere zur Erzeugung eines Fluorecence-Lifetime-Image kann vorgesehen sein, dass sequentiell aufeinanderfolgend unterschiedliche, insbesondere benachbarte und/oder benachbart in einer Scanzeile angeordnete, Probenbereiche hinsichtlich der Lebensdauer eines angeregten Zustandes untersucht werden. Hierbei ist es zur weiteren Datenauswertung besonders vorteilhaft, wenn den Datenfolgen und/oder Datenworten und/oder Häufigkeitsverteilungen und/oder zeitlichen Differenzen jedes Probenbereichs eine Ortsinformation hinzugefügt wird.

Um sequentiell aufeinanderfolgend unterschiedliche, insbesondere benachbarte, Probenorte untersuchen zu können - insbesondere zu einem Abrastern einer Probe - kann vorteilhaft eine Scaneinrichtung zum Lenken des Anregungslichtes und/oder des Detektionslichtes verwendet werden. Diese kann beispielsweise einen oder mehrere Kippspiegel beinhalten, deren Drehstellung beispielsweise mit Hilfe von Galvanometern einstellbar ist.

Bei einer besonders vorteilhaften Ausführungsform ist eine Scaneinrichtung zum Lenken des Anregungslichtes auf unterschiedliche Probenorte und/oder zum Abrastern einer Probe vorgesehen, wobei die Steuerungsvorrichtung Ortsinformationen bezüglich der jeweiligen Stellung der Scaneinrichtung den Datenfolgen und/oder Datenworten und/oder Häufigkeitsverteilungen und/oder zeitlichen Differenzen jedes Probenbereichs hinzufügt. Aus diesen Daten kann besonders schnell und effizient ein Fluorecence-Lifetime-Image erzeugt werden.

Bei einer ganz besonders zuverlässig und schnell arbeitenden Ausführung sind die Steuerungsvorrichtung und/oder wenigstens eine Abtastvorrichtung und/oder wenigstens einer der Seriell-Parallel-Wandler Bestandteile eines programmierbaren integrierten Schaltkreises, insbesondere eines Field Programmable Gate Array (kurz: FPGA). Eine solche Ausführung hat darüber hinaus den Vorteil, dass sie besonders einfach an die individuellen Randbedingungen anfassbar ist.

Bei einer vorteilhaften Ausführung ist die erfindungsgemäße Vorrichtung Teil eines Scanmikroskops, insbesondere eines konfokalen Scanmikroskops.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein Ausführungsbeispiel eines Scanmikroskops, das eine erfindungsgemäße Vorrichtung aufweist,
- Fig. 2: eine Darstellung des zeitlichen Leistungsverlaufs des Anregungslichts und des Detektionslichts bei sehr niedriger Anregungslichtleistung und bei hoher Anregungslichtleistung,
- Fig. 3: eine Darstellung des zeitlichen Verlaufs des Anregungslichts und des Detektionslicht, sowie eine Darstellung der digitalen Datenfolgen bei einer möglichen Ausführungsform,
- Fig. 4: eine Darstellung des zeitlichen Verlaufs des Anregungslichts und des Detektionslicht, sowie eine Darstellung der digitalen Datenfolgen bei einer anderen möglichen Ausführungsform,
- Fig. 5: eine schematische Darstellung eines Ausführungsbeispieles und
- Fig. 6: eine schematische Darstellung der Abläufe zur Erhöhung der zeitlichen Auflösung bei der Abtastung eines ersten und/oder zweiten analogen elektrischen Signals.

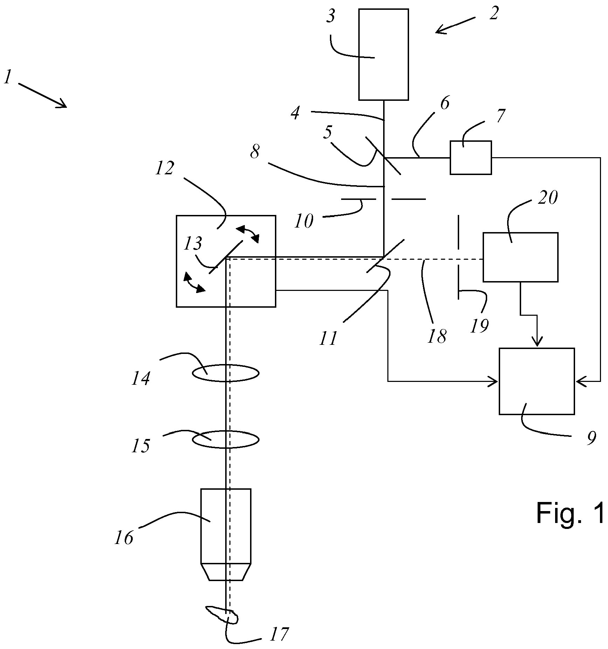

Figur 1 zeigt ein Ausführungsbeispiel eines Scanmikroskops 1, das eine erfindungsgemäße Vorrichtung aufweist. Das Scanmikroskop 1 ist als konfokales Scanmikroskop ausgeführt.

Das Scanmikroskop 1 weist eine Lichtquelle 2 auf, die als Pulslaser 3 zum Erzeugen einer schnellen Folge von Anregungslichtpulsen ausgebildet ist. Konkret erzeugt der Pulslaser 3 einen Primärlichtstrahl 4 der auf einen ersten Strahlteiler 5 trifft. Dort wird der Primärlichtstrahl 4 in einen Messstrahl 6 und einen Anregungslichtstrahl 8 aufgespalten. Der Messstrahl 6 wird auf einen Anregungsdetektor 7 gelenkt. Der Anregungsdetektor 7 erzeugt ein erstes analoges elektrisches Signal, dessen zeitlicher Amplitudenverlauf zum Verlauf der Lichtleistung des Anregungslichtstrahls 8 proportional ist. Das erste analoge elektrische Signal wird eine Steuerungsvorrichtung 9 übergeben. Diese erzeugt aus dem ersten analogen elektrischen Signal eine erste digitale Datenfolge, die den zeitlichen Lichtleistungsverlauf des Anregungslichtes 8 repräsentiert.

Der Anregungslichtstrahl 8 passiert ein Beleuchtungspinhole 10 und gelangt dann zu dem Hauptstrahlteiler 11. Dieser lenkt den Anregungslichtstrahl 8 zu einer Scanvorrichtung 12, die einen kardanisch aufgehängten Scanspiegel 13 beinhaltet. Anschließend gelangt der Anregungslichtstrahl 8 durch die Scanoptik 14 und die Tubusoptik 15 und durch das Mikroskopobjektiv 16 zu der Probe 17. Dort wird ein Probenbereich mit dem Anregungslicht beaufschlagt und so die dort vorhandenen Fluoreszenzfarbstoffe optisch angeregt.

Das von der Probe 17 ausgehende Detektionslicht 18 gelangt auf dem Lichtweg, auf dem der Anregungslichtstrahl 8 von dem Hauptstrahlteiler 11 zu der Probe 17 gelangt ist, in umgekehrter Richtung folgend zum Hauptstrahlteiler 11, passiert diesen und das nachfolgende Detektionspinhole 19 und gelangt schließlich zu einem Detektor 20.

Der Detektor 20 erzeugt ein zweites analoges elektrisches Signal, dessen zeitlicher Amplitudenverlauf vom zeitlichen Verlauf der Lichtleistung des Detektionslichtes 18 abhängt. Das zweite analoge elektrische Signal wird ebenfalls an die Steuerungsvorrichtung 9 übergeben. Dort wird das zweite analoge elektrische Signal zum Erzeugen der zweiten digitalen Datenfolge zeitlich in vorgegebenen zweiten Zeitrasterabschnitten zeitlich abgetastet, wobei die Steuerungsvorrichtung 9 - wie in den folgenden Ausführungsbeispieles noch genauer aufgezeigt wird - die zweite Datenfolge in zeitlicher Korrelation zu der ersten Datenfolge erzeugt.

Die Scaneinrichtung 12 übergibt der Steuerungsvorrichtung 9 Informationen bezüglich der jeweiligen Stellung des Scanspiegels 13, die die Steuerungsvorrichtung 9 jeweils den aus dem ersten analogen Signal und dem zweiten analogen Signal gewonnenen Daten derart zuordnet, dass zurückgeschlossen werden kann, zu welchem Probenort die Daten gehören.

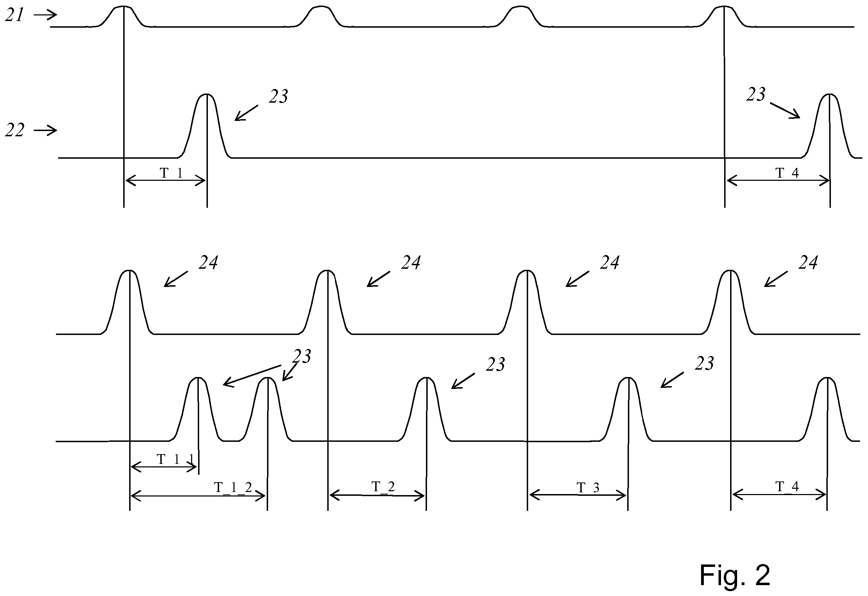

Figur 2 zeigt in der oberen Bildhälfte eine Darstellung des zeitlichen Leistungsverlaufs des Anregungslichts 21 und des zeitlichen Leistungsverlaufs des Detektionslichts 22 bei sehr niedriger Anregungslichtleistung. Es ist zu erkennen, dass lediglich wenige Photonenereignisse 23 zu erfassen sind und detektiert werden, weil die Emissionswahrscheinlichkeit aufgrund der geringen Leistung des Anregungslichts gering ist. Eine solche Messsituation können auch die aus dem Stand der Technik bekannten Vorrichtungen noch bewältigen. Dies trifft jedoch nicht auf die in der unteren Bildhälfte dargestellte Situation (hohe Anregungslichtleistung) zu.

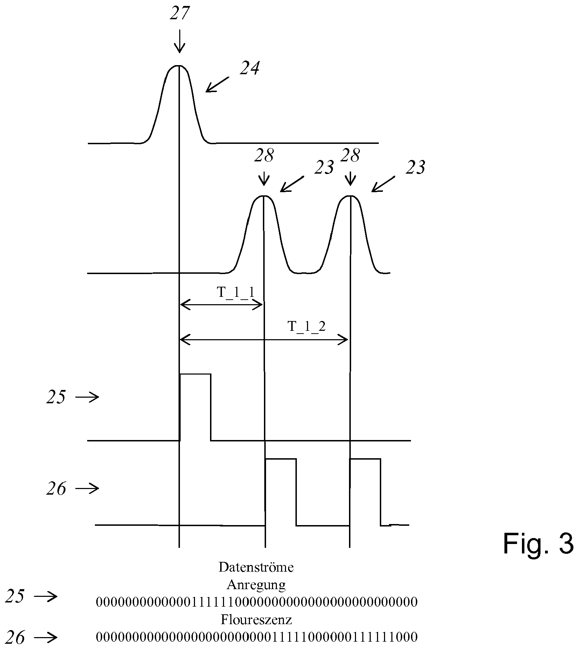

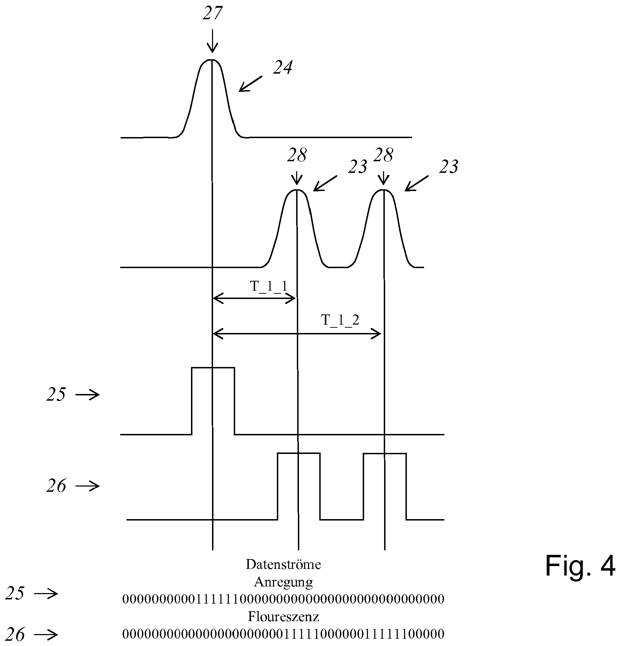

Bei einer hohen Anregungslichtleistung ist die Emissionswahrscheinlichkeit so groß, dass ein Anregungslichtpuls 24 auch mehrere Photonenereignisse 23 auslösen kann. Die Erzeugung einer ersten digitalen Datenfolge 25 und einer zweiten digitalen Datenfolge 26 ist in den Figuren 3 und 4 dargestellt.

Figur 3 und Figur 4 zeigen Ausführungen, bei denen die digitalen Datenfolgen 25, 26 aus standardisierten elektrischen Signalen, nämlich den Binärziffern 0 und 1 derart erzeugt werden, dass entweder ein unteres standardisiertes Signal, also 0, gesetzt wird, wenn die gerade abgetastete Amplitude unterhalb einer festgelegten und/oder festlegbaren ersten Anregungsschwelle liegt, oder ein oberes standardisiertes Signal, also 1, gesetzt wird, wenn die gerade abgetastete Amplitude oberhalb einer festgelegten und/oder festlegbaren zweiten Anregungsschwelle liegt. Die Schwellen können, müssen jedoch nicht notwendigerweise gleich sein.

Bei der in Figur 3 dargestellten Ausführung ist vorgesehen, dass - insbesondere von einer Steuerungsvorrichtung 9 - als erster Schaltzeitpunkt 27 derjenige Zeitpunkt festgelegt wird, bei dem innerhalb der ersten Datenfolge 25 und/oder innerhalb eines ersten Datenwortes ein Wechsel von einem unteren standardisierten Signal, also 0, zu einem oberen standardisierten Signal, also 1, vorliegt.

Analog wird als jeweils ein zweiter Schaltzeitpunkt 28 in Bezug auf die zweite Datenfolge 26 als zweite Schaltzeitpunkte 28 diejenigen Zeitpunkts festgelegt, bei denen innerhalb der zweiten Datenfolge 26 und/oder innerhalb eines zweiten Datenwortes ein Wechsel von einem unteren standardisierten Signal, also 0, zu einem oberen standardisierten Signal, also 1, vorliegt.

Figur 4 zeigt eine andere Ausführung, die insbesondere bei der Verwendung von Proprotionaldiskriminatoren vorteilhaft verwendbar ist. Bei dieser Ausführung ist vorgesehen, dass - insbesondere von einer Steuerungsvorrichtung 9 - als erster Schaltzeitpunkt 27 derjenige Zeitpunkt festgelegt wird, der sich als arithmetisches Mittel aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge 25 und/oder innerhalb des ersten Datenwortes, errechnet. Analog werden auch die zweiten Schaltzeitpunkte 28 als arithmetische Mittel der Zeitpunkte der entsprechenden Wechsel innerhalb der zweiten Datenfolge 26 errechnet.

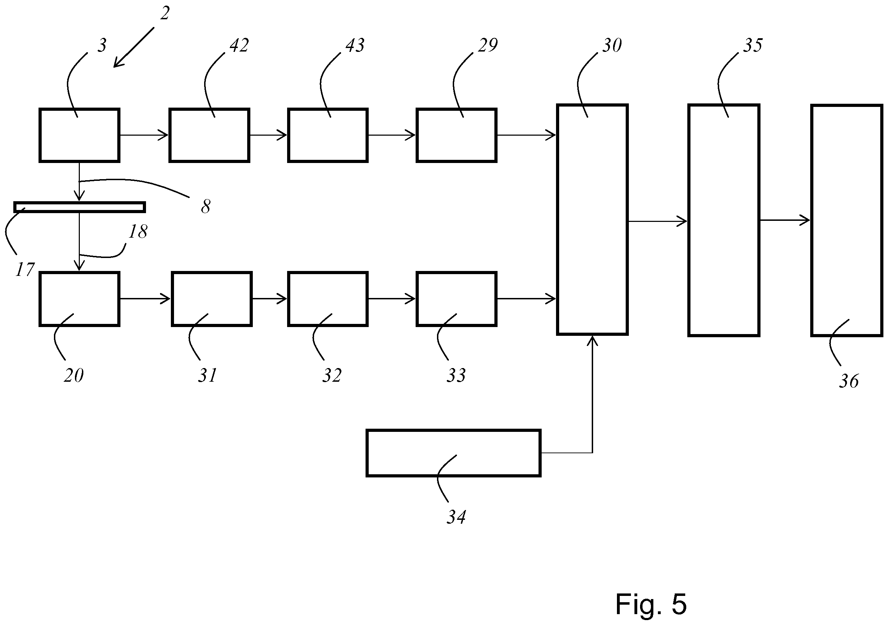

Figur 5 zeigt eine schematische Darstellung eines Ausführungsbeispieles, in der die einzelnen Komponenten übersichtlich als Kästchen dargestellt sind. Eine Probe 17 wird mit Beleuchtungslicht 8 einer Lichtquelle 2 beleuchtet, die als Pulslaser 3 ausgebildet ist. Gleichzeitig wird ein erstes analoges elektrisches Signal erzeugt, dessen Amplitude zur Lichtleistung des Beleuchtungslichtes 8 proportional ist. Das erste analoge elektrische Signal wird zur Signalaufbereitung an einen ersten Proportionaldiskriminator 42 übergeben. Das aufbereitete, erste analoge elektrische Signal gelangt anschließend zu einem ersten Komparator 43 der eine erste digitale Datenfolge durch zeitliches Abtasten des ersten analogen Signals erzeugt.

Die erste digitale Datenfolge wird an einen ersten Serie-parallel-Wandler 29 übergeben, der erste parallele Datenworte erzeugt. Die Datenworte repräsentieren dabei jeweils einen Messezeitraum, der genauso lang ist, wie der zeitliche Abstand aufeinander folgender Anregungslichtpulse. Die Datenworte werden anschließend an eine Zuordnungseinheit 30 übergeben.

Ein Detektor 20 empfängt das von der Probe 17 ausgehende Detektionslicht 18 und erzeugt ein zweites analoges elektrisches Signal, das zur Signalaufbereitung an einen zweiten Proportionaldiskriminator 31 übergeben wird. Das aufbereitete zweite analoge elektrische Signal gelangt anschließend zu einem zweiten Komparator 32 der eine zweite digitale Datenfolge durch zeitliches Abtasten des zweiten analogen Signals erzeugt. Die zweite digitale Datenfolge wird an einen zweiten Serie-parallel-Wandler 33 übergeben, der zweite parallele Datenworte erzeugt. Die zweiten Datenworte repräsentieren dabei jeweils einen Messezeitraum, der genauso lang ist, wie der zeitliche Abstand aufeinander folgender Anregungslichtpulse. Die zweiten Datenworte werden anschließend ebenfalls an eine Zuordnungseinheit 30 übergeben.

Von einer Scan-Steuerungseinheit 34 werden Pixeldaten, die dem aktuell untersuchten Probenbereich zugeordnet sind, bereitgestellt und ebenfalls an die Zuordnungseinheit 30 übergeben.

Die Zuordnungseinheit 30 ordnet die ersten Datenworte, die zweiten Datenworte und die Pixeldaten innerhalb von Datenpaketen einander zu. Die Datenpakete werden anschließend an einer Einheit 35 zum Ermitteln der Schaltzeitpunkte und zum Errechnen der zeitlichen Differenz zwischen den ersten und zweiten Schaltzeitpunkten übergeben. In der Einheit 35 wird zusätzlich jeweils auch eine Häufigkeitsverteilung der zeitlichen Differenz berechnet. Die berechneten Daten und Informationen werden an einen Speicher 36 übergeben und dort abgelegt. Es besteht die Möglichkeit, die Daten und Informationen zu einem späteren Zeitpunkt offline weiter auszuwerten. Alternativ oder zusätzlich können die Daten auch während des Experimentes online - beispielsweise in Form einer FLIM-Abbildung - dem Benutzer angezeigt werden.

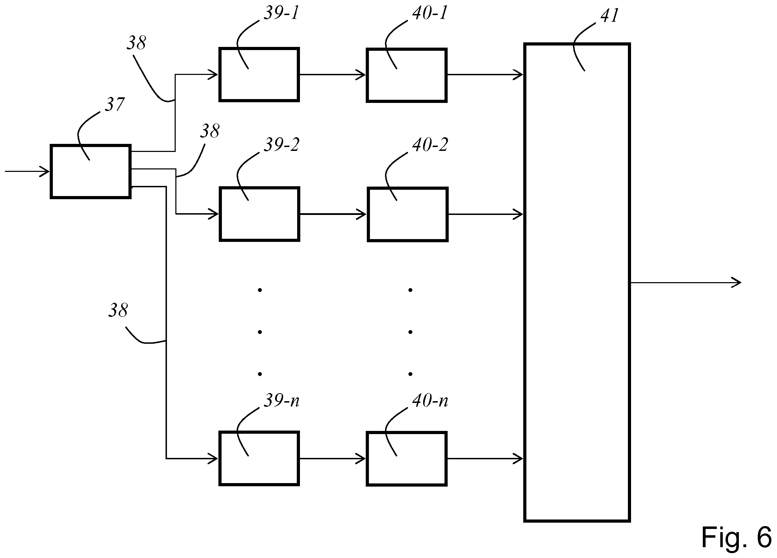

Fig. 6 zeigt eine schematische Darstellung der Abläufe zur Erhöhung der zeitlichen Auflösung bei der Abtastung eines ersten und/oder zweiten analogen elektrischen Signals. Hierbei wird das jeweilige analoge elektrische Signal 37 von einem Komparator 37 - wie oben ausführlich beschrieben - in n identische digitale Datenfolgen 38 umgesetzt. Jede der digitalen Datenfolgen 38 durchläuft eine Verzögerungsstufe39-1 bis 39-n, wobei die Verzögerungsstufen 39-1 bis 39-n die jeweilige digitale Datenfolge 38 unterschiedlich verzögert. Die Verzögerungszeit der Verzögerungsstufe 39- x unterscheidet sich von der Verzögerungszeit der nächsten Verzögerungsstufe 39-(x+1) um einen Zeitversatz, der dem n-ten Bruchteil eines Zeitrasterabschnitts entspricht. Anschließend werden die digitalen Datenfolgen 38 jeweils einem Seriell-Parallel-Wandler 40-1 bis 40-n übergeben, der jeweils digitale Datenworte erzeugt. Diese werden anschließend in einer Verrechnungs- und Zuordnungseinheit 41 miteinander verrechnet.

### Bezugszeichenliste

- 1: Scanmikroskop
- 2: Lichtquelle
- 3: Pulslaser
- 4: Primärlichtstrahl
- 5: Strahlteiler
- 6: Messstrahl
- 7: Anregungsdetektor
- 8: Anregungslichtstrahl
- 9: Steuerungsvorrichtung
- 10: Beleuchtungspinhole
- 11: Hauptstrahlteiler
- 12: Scanvorrichtung
- 13: Scanspiegel
- 14: Scanoptik
- 15: Tubusoptik
- 16: Mikroskopobjektiv
- 17: Probe
- 18: Detektionslicht
- 19: Detektionspinhole
- 20: Detektor
- 21: zeitlicher Leistungsverlauf des Anregungslichts
- 22: zeitlicher Leistungsverlauf des Detektionslichts
- 23: Photonenereignis
- 24: Anregungslichtpuls
- 25: erste digitale Datenfolge
- 26: zweite digitale Datenfolge
- 27: erster Schaltzeitpunkt
- 28: zweiter Schaltzeitpunkt
- 29: erster Serie-Parallel-Wandler
- 30: Zuordnungseinheit
- 31: Proportionaldiskriminator
- 32: Komparator
- 33: zweiter Serie-Parallel-Wandler
- 34: Scan-Steuerungseinheit
- 35: Einheit
- 36: Speicher
- 37: elektrisches Signal
- 38: digitale Datenfolge
- 39: Verzögerungsstufe
- 40: Seriell-Parallel-Wandler
- 41: Verrechnungs- und Zuordnungseinheit
- 42: erster Proportionaldiskriminator
- 43: erster Komparator

## Patentansprüche

1. Verfahren zum Messen einer Fluoreszenzlebensdauer eines angeregten Zustandes in einer Probe, **gekennzeichnet durch** folgende Schritte:
a. Erzeugen eines Anregungslichtpulses und Beleuchten eines Probenbereichs mit dem Anregungslichtpuls,
b. Erzeugen einer ersten digitalen Datenfolge, die den zeitlichen Lichtleistungsverlauf des Anregungslichtpulses repräsentiert,
c. Ermitteln eines ersten Schaltzeitpunktes aus der ersten digitalen Datenfolge, wobei
i. als erster Schaltzeitpunkt derjenige Zeitpunkt festgelegt wird, bei dem innerhalb der ersten Datenfolge ein Wechsel von einem unteren standardisierten Signal zu einem oberen standardisierten Signal oder ein Wechsel von einem oberen standardisierten Signal zu einem unteren standardisierten Signal vorliegt, oder wobei
ii. als erster Schaltzeitpunkt derjenige Zeitpunkt festgelegt wird, der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
d. Detektieren des von dem Probenbereich ausgehenden Detektionslichtes als mindestens ein Photonenereignis mit einem Detektor,
e. Erzeugen einer zweiten digitalen Datenfolge, die den zeitlichen Lichtleistungsverlauf des Detektionslichtes repräsentiert,
f. Ermitteln eines zweiten Schaltzeitpunktes aus der zweiten digitalen Datenfolge, wobei
i. als zweiter Schaltzeitpunkt derjenige Zeitpunkt festgelegt wird, bei dem innerhalb der zweiten Datenfolge ein Wechsel von einem unteren standardisierten Signal zu einem oberen standardisierten Signal oder ein Wechsel von einem oberen standardisierten Signal zu einem unteren standardisierten Signal vorliegt, oder wobei
ii. als zweiter Schaltzeitpunkt derjenige Zeitpunkt festgelegt wird, der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
g. Berechnen der zeitlichen Differenz zwischen dem ersten und dem zweiten Schaltzeitpunkt und
h. die Schritte a bis g zyklisch wiederholt werden.

2. Verfahren nach Anspruch 1, **dadurch gekennzeichnet, dass**
die Schritte a bis g mit einer konstanten Repetitionsfrequenz zyklisch wiederholt werden.

3. Verfahren nach Anspruch 1 oder 2, **dadurch gekennzeichnet, dass** der Anregungslichtpuls einem Primärlichtpuls entstammt, von dem ein Teil einem Anregungsdetektor zugeführt wird, der ein erstes analoges elektrisches Signal erzeugt, dessen zeitlicher Amplitudenverlauf vom zeitlichen Verlauf der Lichtleistung des Teils des Primärlichtpulses abhängt, wobei das erste analoge elektrische Signal zum Erzeugen der ersten digitalen Datenfolge zeitlich - insbesondere in vorgegebenen und/oder vorgebbaren ersten Zeitrasterabschnitten - abgetastet wird, und dass der Detektor ein zweites analoges elektrisches Signal erzeugt, dessen zeitlicher Amplitudenverlauf vom zeitlichen Verlauf der Lichtleistung des Detektionslichtes abhängt, wobei das zweite analoge elektrische Signal zum Erzeugen der zweiten digitalen Datenfolge zeitlich - insbesondere in vorgegebenen und/oder vorgebbaren zweiten Zeitrasterabschnitten - abgetastet wird.

4. Verfahren nach einem der Ansprüche 1 bis 3, **dadurch gekennzeichnet, dass** die erste Datenfolge und/oder die zweite Datenfolge aus standardisierten elektrischen Signalen, insbesondere Binärziffern, derart erzeugt wird, dass entweder ein unteres standardisiertes Signal erzeugt wird, wenn die gerade abgetastete Amplitude unterhalb einer festgelegten und/oder festlegbaren ersten Anregungsschwelle liegt, oder ein oberes, vom unteren standardisierten Signal verschiedenes standardisiertes Signal erzeugt wird, wenn die gerade abgetastete Amplitude oberhalb eine festgelegten und/oder festlegbaren zweiten Anregungsschwelle liegt.

5. Verfahren nach Anspruch 3 oder 4, **dadurch gekennzeichnet, dass** zur Erhöhung der zeitlichen Auflösung das erste analoge elektrische Signal und/oder das zweite analoge elektrische Signal mehrmals, jedoch mit einem - insbesondere stufenlos einstellbaren - Zeitversatz, der kürzer ist, als ein Zeitrasterabschnitt, oder mit einem Zeitversatz, der dem n-ten Bruchteil eines Zeitrasterabschnitts entspricht, abgetastet wird, wobei die Abtastergebnisse der mehrmaligen Abtastungen miteinander zu der ersten Datenfolge bzw. zu der zweiten Datenfolge verrechnet, insbesondere ineinander verkämmt, werden.

6. Verfahren nach einem der Ansprüche 1 bis 5, **dadurch gekennzeichnet, dass** das Erzeugen der ersten digitalen Datenfolge mit einer ersten Abtastvorrichtung erfolgt, die einen Komparator und/oder einen Proportionaldiskriminator aufweist und/oder dass das Erzeugen der zweiten digitalen Datenfolge mit einer zweiten Abtastvorrichtung erfolgt, die einen Komparator und/oder einen Proportionaldiskriminator aufweist.

7. Verfahren nach einem der Ansprüche 1 bis 6, **dadurch gekennzeichnet, dass** die erste Datenfolge, insbesondere mit einem ersten Seriell-Parallel-Wandler, in parallele erste Datenworte umgesetzt wird und/oder dass die zweite Datenfolge, insbesondere mit einem zweiten Seriell-Parallel-Wandler in parallele zweite Datenworte umgesetzt wird.

8. Verfahren nach Anspruch 7, **dadurch gekennzeichnet, dass** die Datenworte jeweils einen Messzeitraum repräsentieren, der mindestens so lang ist, insbesondere genauso lang ist, wie der zeitliche Abstand aufeinanderfolgender Anregungslichtpulse.

9. Verfahren nach einem der Ansprüche 1 bis 8, **dadurch gekennzeichnet, dass** sequentiell aufeinanderfolgend unterschiedliche, insbesondere benachbarte und/oder benachbart in einer Scanzeile angeordnete, Probenbereiche hinsichtlich der Lebensdauer eines angeregten Zustandes untersucht werden, wobei den Datenfolgen und/oder Datenworten und/oder Häufigkeitsverteilungen und/oder zeitlichen Differenzen jedes Probenbereichs eine Ortsinformation hinzugefügt wird.

10. Vorrichtung zum Messen einer Fluoreszenzlebensdauer eines angeregten Zustandes in einer Probe mit einer Lichtquelle zum Erzeugen eines Anregungslichtpulses zum Beleuchten eines Probenbereichs mit dem Anregungslichtpuls und mit einem Detektor zum Detektieren des von dem Probenbereich ausgehenden Detektionslichtes als mindestens ein Photonenereignis, wobei eine Steuerungsvorrichtung vorgesehen ist, die dazu ausgebildet ist,
a. eine erste digitale Datenfolge, die den zeitlichen Lichtleistungsverlauf des Anregungslichtpulses repräsentiert, zu erzeugen,
b. aus der ersten digitalen Datenfolge einen ersten Schaltzeitpunkt zu ermitteln, wobei
i. als erster Schaltzeitpunkt derjenige Zeitpunkt festgelegt wird, bei dem innerhalb der ersten Datenfolge ein Wechsel von einem unteren standardisierten Signal zu einem oberen standardisierten Signal oder ein Wechsel von einem oberen standardisierten Signal zu einem unteren standardisierten Signal vorliegt, oder wobei
ii. als erster Schaltzeitpunkt derjenige Zeitpunkt festgelegt wird, der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
c. eine zweite digitale Datenfolge zu erzeugen, die den zeitlichen Lichtleistungsverlauf des Detektionslichtes repräsentiert,
d. aus der zweiten digitalen Datenfolge einen zweiten Schaltzeitpunkt zu ermitteln, wobei
i. als zweiter Schaltzeitpunkt derjenige Zeitpunkt festgelegt wird, bei dem innerhalb der zweiten Datenfolge ein Wechsel von einem unteren standardisierten Signal zu einem oberen standardisierten Signal oder ein Wechsel von einem oberen standardisierten Signal zu einem unteren standardisierten Signal vorliegt, oder wobei
ii. als zweiter Schaltzeitpunkt derjenige Zeitpunkt festgelegt wird, der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge errechnet wird,
e. die zeitliche Differenz zwischen dem ersten und dem zweiten Schaltzeitpunkt zu berechnen und
f. die Schritte a bis e zyklisch zu wiederholen.

11. Vorrichtung nach Anspruch 10, wobei die Steuerungsvorrichtung dazu ausgebildet ist, zur Erhöhung der zeitlichen Auflösung das erste analoge elektrische Signal und/oder das zweite analoge elektrische Signal mehrmals, jedoch mit einem - insbesondere stufenlos einstellbaren - Zeitversatz, der kürzer ist, als ein Zeitrasterabschnitt, oder mit einem Zeitversatz, der dem n-ten Bruchteil eines Zeitrasterabschnitts entspricht, abzutasten, und wobei die Steuerungsvorrichtung dazu ausgebildet ist, die Abtastergebnisse der mehrmaligen Abtastungen miteinander zu der ersten Datenfolge bzw. zu der zweiten Datenfolge verrechnet, insbesondere ineinander zu verkämmen.

12. Vorrichtung nach Anspruch 10 oder 11, wobei die Vorrichtung eine erste Abtastvorrichtung aufweist, welche dazu ausgebildet ist, die erste digitale Datenfolge zu erzeugen, und welche einen Komparator und/oder einen Proportionaldiskriminator aufweist, und/oder wobei die Vorrichtung eine zweite Abtastvorrichtung aufweist, welche dazu ausgebildet ist, die zweite digitale Datenfolge zu erzeugen, und welche einen Komparator und/oder einen Proportionaldiskriminator aufweist.

13. Vorrichtung nach einem der Ansprüche 10 bis 12, wobei ein erster Seriell-Parallel-Wandler zum Umsetzen der ersten Datenfolge in parallele erste Datenworte vorgesehen ist und/oder wobei ein zweiter Seriell-Parallel-Wandler zum Umsetzen der zweiten Datenfolge in parallele zweite Datenworte vorgesehen ist.

14. Vorrichtung nach Anspruch 13, wobei der erste und/oder der zweite Seriell-Parallel-Wandler dazu ausgebildet ist, Datenworte zu erzeugen, die jeweils einen Messzeitraum repräsentieren, der mindestens so lang ist, insbesondere genauso lang ist, wie der zeitliche Abstand aufeinanderfolgender Anregungslichtpulse.

15. Scanmikroskop mit einer Vorrichtung nach einem der Ansprüche 10 bis 14.

## Claims

1. Method for measuring a fluorescence lifetime of an excited state in a sample, **characterized by** the following steps:
a. generating an excitation light pulse and illuminating a sample region with the excitation light pulse,
b. generating a first digital data sequence, which represents the luminous power curve of the excitation light pulse over time,
c. ascertaining a first switching time from the first digital data sequence, wherein
i. the time at which there is a change from a lower standardized signal to an upper standardized signal or a change from an upper standardized signal to a lower standardized signal within the first data sequence is set as first switching time, or wherein
ii. the time which is calculated from the time of a first change from a lower standardized signal to an upper standardized signal and from the time of a second change from an upper standardized signal to a lower standardized signal within the first data sequence is set as first switching time,
d. detecting the detection light emanating from the sample region as at least one photon event using a detector,
e. generating a second digital data sequence, which represents the luminous power curve of the detection light over time,
f. ascertaining a second switching time from the second digital data sequence, wherein
i. the time at which there is a change from a lower standardized signal to an upper standardized signal or a change from an upper standardized signal to a lower standardized signal within the second data sequence is set as second switching time, or wherein
ii. the time which is calculated from the time of a first change from a lower standardized signal to an upper standardized signal and from the time of a second change from an upper standardized signal to a lower standardized signal within the first data sequence is set as second switching time,
g. calculating the time difference between the first and the second switching time and
h. repeating steps a to g cyclically.

2. Method according to Claim 1, **characterized in that** steps a to g are cyclically repeated at a constant repetition frequency.

3. Method according to Claim 1 or 2, **characterized in that** the excitation light pulse originates from a primary light pulse, a part of said pulse is fed to an excitation detector which generates a first analogue electrical signal, the amplitude curve of which over time depends on the curve of the luminous power of the part of the primary light pulse over time, wherein the first analogue electrical signal is sampled over time - in particular at specified and/or specifiable first time grid intervals - for the purposes of generating the first digital data sequence, and **in that** the detector generates a second analogue electrical signal, the amplitude curve of which over time depends on the curve of the luminous power of the detection light over time, wherein the second analogue electrical signal is sampled over time - in particular at specified and/or specifiable second time grid intervals - for the purposes of generating the second digital data sequence.

4. Method according to any one of Claims 1 to 3, **characterized in that** the first data sequence and/or the second data sequence is generated from standardized electrical signals, in particular binary numbers, in such a way that either a lower standardized signal is generated if the currently sampled amplitude lies below a specified and/or specifiable first excitation threshold, or an upper standardized signal which differs from the lower standardized signal is generated if the currently sampled amplitude lies above a specified and/or specifiable second excitation threshold.

5. Method according to Claim 3 or 4, **characterized in that**, for the purposes of increasing the time resolution, the first analogue electrical signal and/or the second analogue electrical signal is sampled multiple times but with a time offset - in particular, a continuously adjustable time offset - which is shorter than a time grid interval, or with a time offset corresponding to the n-th fraction of a time grid interval, wherein the sampling results of the multiple sampling instances are combined, in particular meshed within one another, to form the first data sequence or to form the second data sequence.

6. Method according to any one of Claims 1 to 5, **characterized in that** the first digital data sequence is generated using a first sampling apparatus which has a comparator and/or a proportional discriminator and/or **in that** the second digital data sequence is generated using a second sampling apparatus which has a comparator and/or a proportional discriminator.

7. Method according to any one of Claims 1 to 6, **characterized in that** the first data sequence is converted into parallel first data words, in particular by means of a first serial-to-parallel converter, and/or **in that** the second data sequence is converted into parallel second data words, in particular by means of a second serial-to-parallel converter.

8. Method according to Claim 7, **characterized in that** the data words each represent a measurement time period which is at least as long as, in particular exactly as long as, the interval between successive excitation light pulses.

9. Method according to any one of Claims 1 to 8, **characterized in that** sequentially successive different sample regions, in particular adjacent sample regions and/or sample regions disposed adjacently in a scan line, are examined in respect of the lifetime of an excited state, wherein spatial information is added to the data sequences and/or data words and/or frequency distributions and/or time differences of each sample region.

10. Apparatus for measuring a fluorescence lifetime of an excited state in a sample, comprising a light source for generating an excitation light pulse for illuminating a sample region with the excitation light pulse and comprising a detector for detecting the detection light emanating from the sample region as at least one photon event, wherein a control apparatus is provided, which is embodied to
a. generate a first digital data sequence, which represents the luminous power curve of the excitation light pulse over time,
b. ascertain a first switching time from the first digital data sequence, wherein
i. the time at which there is a change from a lower standardized signal to an upper standardized signal or a change from an upper standardized signal to a lower standardized signal within the first data sequence is set as first switching time, or wherein
ii. the time which is calculated from the time of a first change from a lower standardized signal to an upper standardized signal and from the time of a second change from an upper standardized signal to a lower standardized signal within the first data sequence is set as first switching time,
c. generate a second digital data sequence, which represents the luminous power curve of the detection light over time,
d. ascertain a second switching time from the second digital data sequence, wherein
i. the time at which there is a change from a lower standardized signal to an upper standardized signal or a change from an upper standardized signal to a lower standardized signal within the second data sequence is set as second switching time, or wherein
ii. the time which is calculated from the time of a first change from a lower standardized signal to an upper standardized signal and from the time of a second change from an upper standardized signal to a lower standardized signal within the first data sequence is set as second switching time,
e. calculate the time difference between the first and the second switching time and
f. repeat steps a to g cyclically.

11. Apparatus according to Claim 10, wherein, for the purposes of increasing the time resolution, the control apparatus is embodied to sample the first analogue electrical signal and/or the second analogue electrical signal multiple times but with a time offset - in particular, a continuously adjustable time offset - which is shorter than a time grid interval, or with a time offset corresponding to the n-th fraction of a time grid interval, and wherein the control apparatus is embodied to combine, in particular mesh together, the sampling results of the multiple sampling instances to form the first data sequence or to form the second data sequence.

12. Apparatus according to Claim 10 or 11, wherein the apparatus has a first sampling apparatus, which is embodied to generate the first digital data sequence and which has a comparator and/or a proportional discriminator, and/or wherein the apparatus has a second sampling apparatus, which is embodied to generate the second digital data sequence and which has a comparator and/or a proportional discriminator.

13. Apparatus according to any one of Claims 10 to 12, wherein provision is made of a first serial-to-parallel converter for converting the first data sequence into parallel first data words and/or wherein provision is made of a second serial-to-parallel converter for converting the second data sequence into parallel second data words.

14. Apparatus according to Claim 13, wherein the first and/or the second serial-to-parallel converter is embodied to generate data words which each represent a measurement time period which is at least as long as, in particular exactly as long as, the interval between successive excitation light pulses.

15. Scanning microscope having an apparatus according to any one of Claims 10 to 14.

## Revendications

1. Procédé de mesure d'une durée de vie de fluorescence dans un état excité d'un échantillon, **caractérisé par** les étapes suivantes :
a. génération d'une impulsion de lumière d'excitation et éclairage d'une zone de l'échantillon avec l'impulsion de lumière d'excitation,
b. génération d'une première séquence de données numériques qui représente la courbe du flux lumineux dans le temps de l'impulsion de lumière d'excitation,
c. détermination d'un premier instant de commutation à partir de la première séquence de données numériques,
i. l'instant auquel, à l'intérieur de la première séquence de données, il existe un changement d'un signal normalisé de niveau bas vers un signal normalisé de niveau haut ou un changement d'un signal normalisé de niveau haut vers un signal normalisé de niveau bas, étant fixé comme le premier instant de commutation, ou
ii. l'instant, qui est calculé à partir de l'instant d'un premier changement d'un signal normalisé de niveau bas vers un signal normalisé de niveau haut et à partir de l'instant d'un deuxième changement d'un signal normalisé de niveau haut vers un signal normalisé de niveau bas à l'intérieur de la première séquence de données, étant fixé comme le premier instant de commutation,
d. détection, avec un détecteur, de la lumière de détection émanant de la zone de l'échantillon en tant qu'au moins un événement photonique,
e. génération d'une deuxième séquence de données numériques qui représente la courbe du flux lumineux dans le temps de la lumière de détection,
f. détermination d'un deuxième instant de commutation à partir de la deuxième séquence de données numériques,
i. l'instant auquel, à l'intérieur de la deuxième séquence de données, il existe un changement d'un signal normalisé de niveau bas vers un signal normalisé de niveau haut ou un changement d'un signal normalisé de niveau haut vers un signal normalisé de niveau bas, étant fixé comme le deuxième instant de commutation, ou
ii. l'instant, qui est calculé à partir de l'instant d'un premier changement d'un signal normalisé de niveau bas vers un signal normalisé de niveau haut et à partir de l'instant d'un deuxième changement d'un signal normalisé de niveau haut vers un signal normalisé de niveau bas à l'intérieur de la première séquence de données, étant fixé comme le deuxième instant de commutation,
g. calcul de la différence dans le temps entre le premier et le deuxième instant de commutation et
h. les étapes a à g sont répétées cycliquement.

2. Procédé selon la revendication 1, **caractérisé en ce que** les étapes a à g sont répétées cycliquement avec une fréquence de répétition constante.

3. Procédé selon la revendication 1 ou 2, **caractérisé en ce que** de l'impulsion de lumière d'excitation provient une impulsion de lumière primaire dont une partie est acheminée à un détecteur d'excitation, lequel génère un premier signal électrique analogique dont la courbe d'amplitude dans le temps dépend de la courbe dans le temps du flux lumineux de la partie de l'impulsion de lumière primaire, le premier signal électrique analogique étant échantillonné dans le temps, notamment dans des premières portions de grille temporelle prédéfinies et/ou prédéfinissables, en vue de générer la première séquence de données numériques, et **en ce que** le détecteur génère un deuxième signal électrique analogique dont la courbe d'amplitude dans le temps dépend de la courbe dans le temps du flux lumineux de la lumière de détection, le deuxième signal électrique analogique étant échantillonné dans le temps, notamment dans des deuxièmes portions de grille temporelle prédéfinies et/ou prédéfinissables, en vue de générer la deuxième séquence de données numériques.

4. Procédé selon l'une des revendications 1 à 3, **caractérisé en ce que** la première séquence de données et/ou la deuxième séquence de données sont générées à partir de signaux électriques normalisés, notamment des chiffres binaires, de telle sorte que soit un signal normalisé de niveau bas est généré lorsque l'amplitude momentanément échantillonnée est inférieure à un premier seuil d'excitation fixé et/ou pouvant être fixé, soit un signal normalisé de niveau haut, différent du signal normalisé de niveau bas, est généré lorsque l'amplitude momentanément échantillonnée est supérieure à un deuxième seuil d'excitation fixé et/ou pouvant être fixé.

5. Procédé selon la revendication 3 ou 4, **caractérisé en ce qu'**en vue d'augmenter la résolution dans le temps, le premier signal électrique analogique et/ou le deuxième signal électrique analogique est échantillonné plusieurs fois, toutefois avec un décalage dans le temps, notamment réglable en continu, qui est plus court qu'une portion de grille temporelle ou avec un décalage dans le temps qui correspond à la n-ème fraction d'une portion de grille temporelle, les résultats de l'échantillonnage des multiples échantillonnages étant calculés ensemble, notamment imbriqués les uns dans les autres, en vue de former la première séquence de données ou la deuxième séquence de données.

6. Procédé selon l'une des revendications 1 à 5, **caractérisé en ce que** la génération de la première séquence de données numériques s'effectue avec un premier dispositif d'échantillonnage qui possède un comparateur et/ou un discriminateur proportionnel et/ou **en ce que** la génération de la deuxième séquence de données numériques s'effectue avec un deuxième dispositif d'échantillonnage qui possède un comparateur et/ou un discriminateur proportionnel.

7. Procédé selon l'une des revendications 1 à 6, **caractérisé en ce que** la première séquence de données est convertie en des premiers mots de données parallèles, notamment avec un premier convertisseur série-parallèle, et/ou **en ce que** la deuxième séquence de données est convertie en des deuxièmes mots de données parallèles, notamment avec un deuxième convertisseur série-parallèle.

8. Procédé selon la revendication 7, **caractérisé en ce que** les mots de données représentent respectivement une période de mesure qui est au moins aussi longue, notamment exactement aussi longue que l'écart dans le temps entre des impulsions de lumière d'excitation successives.

9. Procédé selon l'une des revendications 1 à 8, **caractérisé en ce que** des zones de l'échantillon différentes séquentiellement successives, notamment voisines et/ou disposées adjacentes dans une ligne de balayage, sont examinées en ce qui concerne la durée de vie d'un état excité, une information d'emplacement étant ajoutée aux séquences de données et/ou aux mots de données et/ou aux distributions de fréquence et/ou aux différences dans le temps de chaque zone de l'échantillon.

10. Dispositif de mesure d'une durée de vie de fluorescence d'un état excité dans un échantillon, comprenant une source de lumière destinée à générer une impulsion de lumière d'excitation pour éclairer une zone de l'échantillon avec l'impulsion de lumière d'excitation et comprenant un détecteur destiné à détecter la lumière de détection émanant de la zone de l'échantillon en tant qu'au moins un événement photonique, un dispositif de commande étant présent, lequel est configuré pour
a. générer une première séquence de données numériques qui représente la courbe du flux lumineux dans le temps de l'impulsion de lumière d'excitation,
b. déterminer un premier instant de commutation à partir de la première séquence de données numériques,
i. l'instant auquel, à l'intérieur de la première séquence de données, il existe un changement d'un signal normalisé de niveau bas vers un signal normalisé de niveau haut ou un changement d'un signal normalisé de niveau haut vers un signal normalisé de niveau bas, étant fixé comme le premier instant de commutation, ou
ii. l'instant, qui est calculé à partir de l'instant d'un premier changement d'un signal normalisé de niveau bas vers un signal normalisé de niveau haut et à partir de l'instant d'un deuxième changement d'un signal normalisé de niveau haut vers un signal normalisé de niveau bas à l'intérieur de la première séquence de données, étant fixé comme le premier instant de commutation,
c. générer une deuxième séquence de données numériques qui représente la courbe du flux lumineux dans le temps de la lumière de détection,
d. déterminer un deuxième instant de commutation à partir de la deuxième séquence de données numériques,
i. l'instant auquel, à l'intérieur de la deuxième séquence de données, il existe un changement d'un signal normalisé de niveau bas vers un signal normalisé de niveau haut ou un changement d'un signal normalisé de niveau haut vers un signal normalisé de niveau bas, étant fixé comme le deuxième instant de commutation, ou
ii. l'instant, qui est calculé à partir de l'instant d'un premier changement d'un signal normalisé de niveau bas vers un signal normalisé de niveau haut et à partir de l'instant d'un deuxième changement d'un signal normalisé de niveau haut vers un signal normalisé de niveau bas à l'intérieur de la première séquence de données, étant fixé comme le deuxième instant de commutation,
e. calculer la différence dans le temps entre le premier et le deuxième instant de commutation et
f. répéter cycliquement les étapes a à e.

11. Dispositif selon la revendication 10, le dispositif de commande étant configuré pour, en vue d'augmenter la résolution dans le temps, échantillonner le premier signal électrique analogique et/ou le deuxième signal électrique analogique plusieurs fois, toutefois avec un décalage dans le temps, notamment réglable en continu, qui est plus court qu'une portion de grille temporelle ou avec un décalage dans le temps qui correspond à la n-ème fraction d'une portion de grille temporelle, et le dispositif de commande étant configuré pour calculer ensemble, notamment imbriquer les uns dans les autres les résultats de l'échantillonnage des multiples échantillonnages en vue de former la première séquence de données ou la deuxième séquence de données.

12. Dispositif selon la revendication 10 ou 11, le dispositif possédant un premier dispositif d'échantillonnage qui est configuré pour générer la première séquence de données numériques et qui possède un comparateur et/ou un discriminateur proportionnel et/ou le dispositif possédant un deuxième dispositif d'échantillonnage qui est configuré pour générer la deuxième séquence de données numériques et qui possède un comparateur et/ou un discriminateur proportionnel.

13. Dispositif selon l'une des revendications 10 à 12, un premier convertisseur série-parallèle étant présent pour convertir la première séquence de données en des premiers mots de données parallèles et/ou un deuxième convertisseur série-parallèle étant présent pour convertir la deuxième séquence de données en des deuxièmes mots de données parallèles.

14. Dispositif selon la revendication 13, le premier et/ou le deuxième convertisseur série-parallèle étant configuré pour générer des mots de données qui représentent respectivement une période de mesure qui est au moins aussi longue, notamment exactement aussi longue, que l'écart dans le temps entre des impulsions de lumière d'excitation successives.

15. Microscope à balayage comprenant un dispositif selon l'une des revendications 10 à 14.
